# EUROPÄISCHE PATENTSCHRIFT

(11) **EP 1 154 909 B1**
(45) Veröffentlichungstag und Bekanntmachung des Hinweises auf die Patenterteilung: **28.01.2004**
(21) Anmeldenummer: 00984958.9
(22) Anmeldetag: 03.11.2000
(51) Int. Cl.: B60K 15/035

(54) **VENTIL UND EIN MIT EINEM VENTIL VERSEHENER KRAFTSTOFFBEHÄLTER EINES KRAFTFAHRZEUGES**
VALVE AND FUEL TANK PROVIDED WITH A VALVE FOR A MOTOR VEHICLE
SOUPAPE ET RESERVOIR D'ESSENCE DE VEHICULE DOTE D'UNE SOUPAPE

(30) Priorität: 26.11.1999 DE 19956932
(43) Veröffentlichungstag der Anmeldung: 21.11.2001
(73) Patentinhaber: Bayerische Motoren Werke Aktiengesellschaft, 80809 München (DE)
(72) Erfinder: KLAFFKI, Heinz, 85716 Unterschleissheim (DE); GEHRING, Marietta, 85646 Anzing (DE)
(86) Internationale Anmeldenummer: PCT/EP2000/010864
(87) Internationale Veröffentlichungsnummer: WO 2001/038118

(56) Entgegenhaltungen:
- EP-A- 0 763 441
- DE-A- 3 342 871
- FR-A- 2 686 840
- US-A- 5 983 958

## Beschreibung

Die Erfindung betrifft ein Ventil gemäß dem Oberbegriff des Anspruchs 1.

Es sind bereits Entlüftungsventile für integrierte Ausgleichsvolumen von Kraftstoffbehältern bekannt, die den maximalen Füllstand im Kraftstoffbehälter begrenzen und somit ein integriertes Ausgleichsvolumen schaffen. Dabei kann es sich um Schwimmerventile zur Betankungsentlüftung handeln, die auch mit Roll-over-Ventilen kombinierbar sind. Bei einem maximalen Füllstand im Kraftstoffbehälter ist die vorhandene Anzahl an Schwimmerventilen geschlossen, so dass in diesem Zustand keine Entlüftung stattfindet.

Die bekannten Schwimmerventile können mit einer By-pass-Bohrung versehen sein, sodass bei einer Volumenausdehnung des Kraftstoffes durch eine Temperaturerhöhung im Kraftstoffbehälter ein Druckausgleich stattfinden kann. Dies hat den Nachteil, dass durch langsames Nachtanken beim Betankungsvorgang das Kraftstoffausgleichsvolumen befüllbar ist.

Bei einer Kombination der Schwimmerventile mit Roll-over-Ventilen ist es nachteilig, dass sich bei Anordnung mehrerer solcher Ventile die Leckage der einzelnen Rollover-Ventile im Fall eines Roll-overs oder Überschlages addieren.

Die Druckschrift US-A-5 983 958 offenbart ein Ventil gemäß dem Oberbegriff des Anspruchs 1.

Aufgabe der Erfindung ist es, ein Ventil zu schaffen, das eine kompakte Bauweise ermöglicht. Ferner ist es Aufgabe der Erfindung, einen Kraftstoffbehälter eines Kraftfahrzeuges mit mindestens einem solchen Ventil anzugeben, sodass der Kraftstoffbehälter einen vereinfachten Aufbau aufweist.

Die für das Ventil genannte Aufgabe wird durch die Merkmale des Anspruchs 1 und die für den Kraftstoffbehälter genannte Aufgabe wird durch die Merkmale des Anspruchs 7 gelöst.

Bei dem erfindungsgemäßen Ventil ist vorteilhafterweise in einem einzigen horizontal angeordneten Bauteil ein Druckventil und ein in zwei Stufen arbeitendes Ventil integriert, das über einen Schwimmer gesteuert wird. Das über den Schwimmer gesteuerte Ventil wird nachfolgend als Schwimmerventil bezeichnet. Bei dem Schwimmerventil erfolgt in einer Stufe die Betankungsentlüftung und in einer anderen Stufe die Entlüftung im Fahrbetrieb. Durch das Schwimmerventil ist über die Betankungsentlüftung vorteilhafterweise eine Begrenzung des Kraftstofffüllstandes im Kraftstoffbehälter möglich. Ferner ist von Vorteil, dass eine Entlüftung des Kraftstoffbehälters sowohl im Fahrbetrieb als auch bei einer Seitenneigung des Kraftstoffbehälters bzw. des Kraftfahrzeuges möglich ist.

Durch die Integration von drei Funktionen in einem horizontal angeordneten Gehäuse ergibt sich eine kompakte Bauweise. Die Zusammenfassung von mehreren Funktionen in einem horizontal angeordneten Bauteil hat ferner den Vorteil, dass die Teilekosten und der Aufwand für Vormontage und Montage reduziert sind.

Von Vorteil ist ferner, dass mit dem erfindungsgemäßen Ventil eine variable Begrenzung des Befüllniveaus im Kraftstoffbehälter allein durch eine Veränderung der Länge und/oder der Form eines Schwimmerhebelarmes möglich ist, an dem der Schwimmer befestigt ist. Vorteilhafterweise kann ferner durch die Einstellung der Länge des Schwimmerhebelarmes, an dem der Schwimmer befestigt ist, die Anpresskraft der vorhandenen Ventile an deren jeweiligen Dichtsitz sowie die Öffnungskraft der Ventile vom Dichtsitz festgelegt werden.

Bei einem mit dem erfindungsgemäßen Ventil ausgestatteten Kraftstoffbehälter wird ein Eindringen von Kraftstoff in eine im Kraftstoffbehälter befindliche Entlüftungsleitung bei Schwappbewegungen des Kraftstoffes im Fahrbetrieb verhindert. Durch die Wellenbewegung des im Kraftstoffbehälter schwappenden Kraftstoffes wird über den Schwimmer das Ventil bereits geschlossen, bevor ein Kraftstoffschwall den Ventilsitz erreicht.

Eine Ausführungsform der Erfindung wird nachstehend anhand der Zeichnungen beispielshalber beschrieben. Dabei zeigen:
- Figur 1: eine perspektivische Ansicht eines Ventils, wobei die Öffnungen zur Betankungsentlüftung und für die Betriebsentlüftung geschlossen sind,
- Figur 2: einen Längsschnitt durch das in der Figur 1 gezeigte Ventil, bei dem die Öffnungen für die Betankungsentlüftung und für die Betriebsentlüftung geschlossen sind,
- Figur 3: einen Längsschnitt durch das in der Figur 1 gezeigte Ventil und durch ein an dem Ventil angeordnetes Druckbegrenzungsventil, wobei die Öffnungen für die Betankungsentlüftung und für die Betriebsentlüftung geöffnet sind,
- Figur 4: einen vertikalen Längsschnitt durch einen. mit zwei Kammern versehenen Kraftstoffbehälter, aus der die Anordnung von zwei Ventilen hervorgeht und
- Figur 5: einen horizontalen Längsschnitt durch den in der Figur 4 gezeigten Kraftstoffbehälter, aus der die Verbindung der Ventile über eine Entlüftungsleitung dargestellt ist.

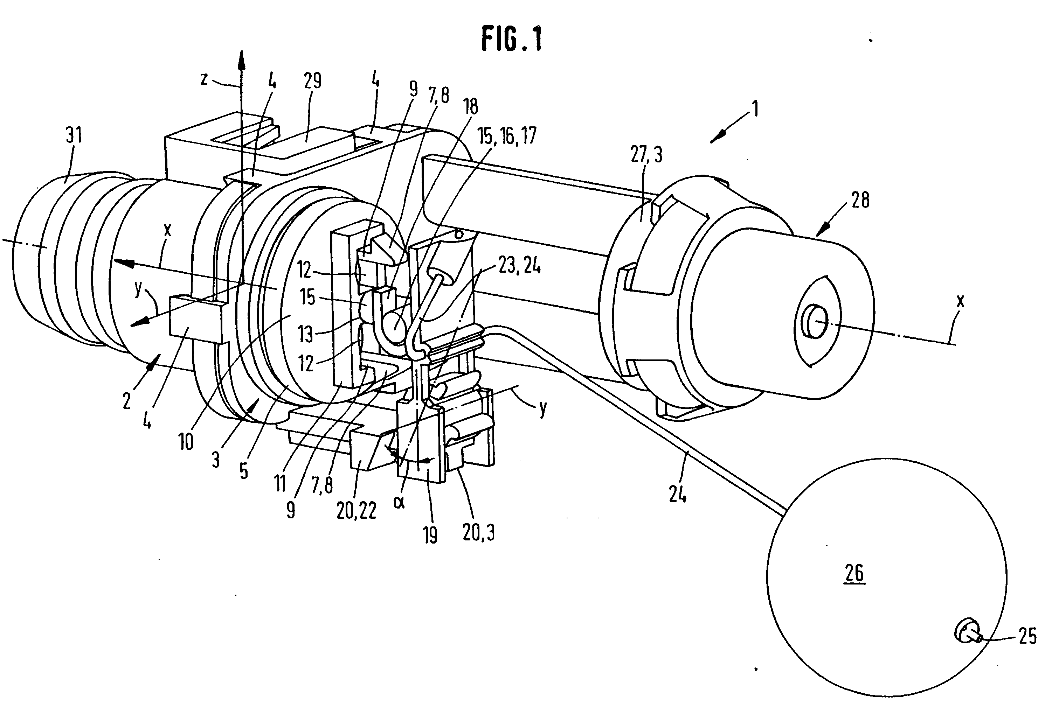

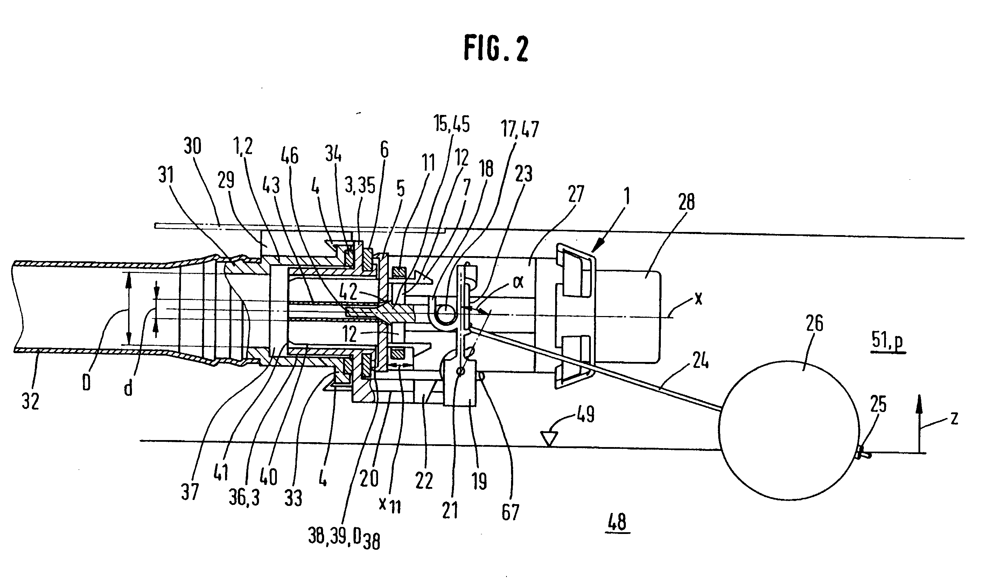

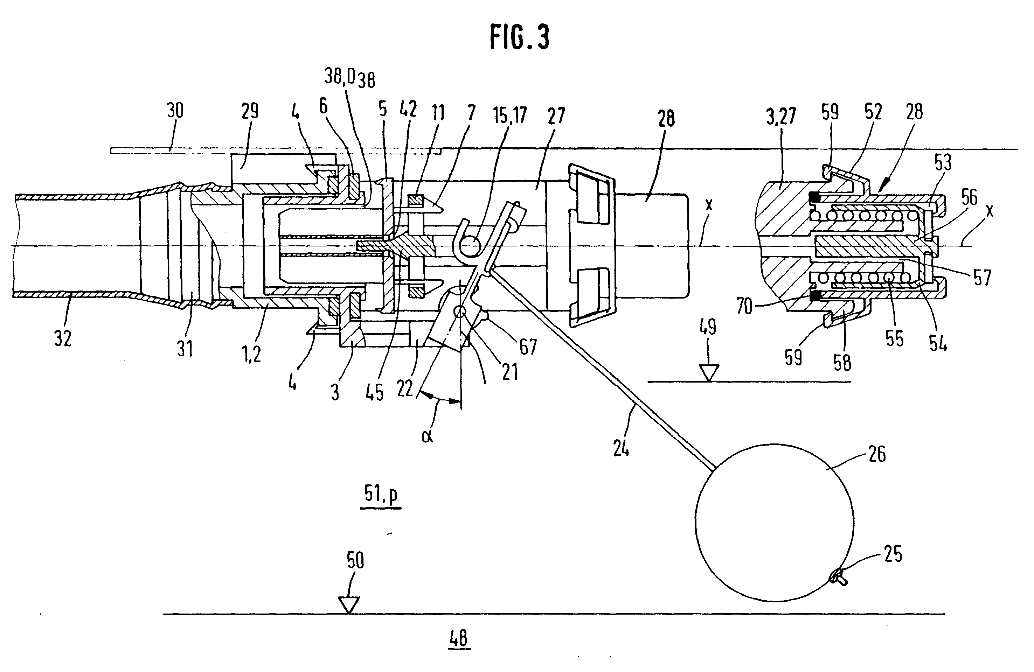

Die Figur 1 zeigt ein Ventil 1 mit einem Ventilgehäuse 2 und einem an dem Ventilgehäuse 2 über Haken 4 oder dergleichen befestigten Deckel 3. Wie aus der Figur 2 hervorgeht, ist an dem Deckel 3 eine Ventilaufnahme als ein rohrförmiger Abschnitt 36 angeformt. Die Ventilaufnahme 36 ist in der Figur 2 erkennbar. An dem Deckel 3 ist eine in Richtung einer Längsachse x verschiebbare Dichtplatte 5 angeordnet, die auf einer in den Figuren 2 und 3 gezeigten Dichtung 6 aufliegt. An der Dichtplatte 5 sind zwei gegenüberliegende Stege 9 ausgebildet, die mit jeweils einem Absatz oder einem Haken 7 an ihrem jeweiligen freien Ende 8 versehen sind.

Zwischen einer Oberfläche 10 der Dichtplatte 5 und den Haken 7 der Stege 9 ist verschiebbar eine rechteckförmige Platte 11 angeordnet. In der Platte 11 sind zwei Öffnungen 12 zur Befestigung der Platte 11 an den Stegen 9 vorgesehen. Die Platte 11 wird in der gezeigten Ausführungsform mit dem Schließteil 15 als ein Spritzteil hergestellt. An der Platte 11 ist an einem mittleren Steg 13 ein Schließteil 15 einteilig angeordnet.

Das Schließteil 15 weist an seinem äußeren Ende 16 einen runden Abschnitt 17 auf, der senkrecht zur Längsachse x, d. h. in der gezeigten Ausführungsform in Richtung einer Querachse y, verläuft. Der Querabschnitt 17 des Schließteils 15 wird durch einen gekrümmten Arm 18 eines Schwenkhebels 19 umgriffen. Der Schwenkhebel 19 ist an einem Abschnitt 20 des Deckels 3 um eine Schwenkachse 21 gehaltert und um einen Schwenkwinkel α schwenkbar. Der Abschnitt 20 weist einen Anschlag 22 zur Begrenzung des Schwenkwinkels α und damit zur Verschiebbarkeit der Dichtplatte 5 und des Schließteils 15 in Richtung der Längsachse x auf. Am Schwenkhebel 19 ist ferner ein Ende 23 eines Schwimmerhebels 24 befestigt. Am freien Ende 25 des Schwimmerhebels 24 ist ein Schwimmer 26 befestigt.

An einem weiteren am Deckel 3 ausgebildeten Abschnitt 27 ist ein Druckbegrenzungsventil 28 angeordnet. An dem Ventilgehäuse 2 ist ferner eine Halterungseinrichtung 29 zur Befestigung des Ventils 1 an einem in den nachfolgenden Figuren 2 bis 5 dargestellten Kraftstoffbehälter 30 ausgebildet. Ferner befindet sich am Ventilgehäuse 2 ein Anschluss 31 zur Befestigung einer beispielsweise in den Figuren 2 und 3 gezeigten Entlüftungsleitung 32.

Die Figur 2 zeigt, dass ein Teil des Ventilgehäuses 2 ein rotationssymmetrisches Bauteil um die Längsachse x ist. Das Ventilgehäuse 2 weist einen Flansch 33 auf, in dem eine Dichtung 34 angeordnet ist. Auf dieser Dichtung 34 ist ein Rand oder Flansch 35 des Deckels 3 angeordnet. Über die Haken 4 des Deckels 3 wird der Rand 35 mit einer vorbestimmten Anpresskraft an die Dichtung 34 gepresst.

Die am Deckel 3 ausgebildete Ventilaufnahme 36 ragt in einen Hohlraum 37 des Ventilgehäuses 2 hinein. Durch die rohrförmige Ventilaufnahme 36 ist der Innendurchmesser D einer Betankungs-Entlüftungsöffnung 38 festgelegt, die an einem dem Schließteil 15 zugewandten Ende 39 des Deckels 3 bzw. der Ventilaufnahme 36 durch die Dichtplatte 5 verschließbar ist. In Höhe des Endes 39 des Deckels 3 ist die Dichtung 6 zur Abdichtung der Betankungs-Entlüftungsöffnung 38 angeordnet. An der Dichtplatte 5 sind Führungen 40, beispielsweise in Form von Stegen, ausgebildet, die durch eine Innenwand 41 der rohrförmigen Ventilaufnahme 36 des Deckels 3 geführt sind.

In der Mitte der Dichtplatte 5 ist eine Betriebs-Entlüftungsöffnung 42 ausgebildet. In der in der Figur 2 gezeigten Ausführungsform ist die Dichtplatte 5 mit einer Innenführung 43 versehen, die durch die sternförmig an der Dichtplatte 5 angeordneten Führungsstege 40 gebildet ist. Ein Innendurchmesser d in der Dichtplatte 5 bestimmt den Querschnitt der Betriebs-Entlüftungsöffnung 42. Die Betriebs-Entlüftungsöffnung 42 ist in dem in der Figur 2 gezeigten Zustand durch einen kegelförmigen Abschnitt 45 des Schließteiles 15 verschlossen. Ein vorderes Ende 46 des Schließteiles 15 ragt in die Innenführung 43 und dient als Führung des Schließteiles 15. An einem hinteren Abschnitt 47 des Schließteiles 15 ist der Querabschnitt 17 des Schließteiles 15 ausgebildet.

Der im Kraftstoffbehälter 30 befindliche Kraftstoff 48 hat seinen maximalen Füllstand 49 erreicht. Der Schwimmer 26 befindet sich in seiner höchsten Lage und verschließt über den Schwenkhebel 19 und das durch den Schwenkhebel 19 verschiebbare Schließteil 15 die Betankungs-Entlüftungsöffnung 38 sowie die Betriebs-Entlüftungsöffnung 42.

In der Figur 3 ist der Kraftstoff 48 von dem maximalen Füllstandsniveau 49 auf ein niedrigeres Füllstandsniveau 50 abgesunken, in dem der Schwimmer 26 keinen Auftrieb mehr erfährt und frei nach unten in den Kraftstoffbehälter 30 hängt. Der Schwenkhebel 19 hat sich dabei um einen Schwenkwinkel α verdreht, der beispielsweise bei α = ca. 10 bis 60 ° liegt. Durch diese Schwenkbewegung wird das Schließteil 15 aus der Betriebs-Entlüftungsöffnung 42 herausgezogen. Nach einem vorgegebenen Weg x₁₁ des Schließteils 15 bzw. der Platte 11 liegt die Platte 11 an dem Anschlag 7 an. Nach einem weiteren Absinken des Schwimmers 26 erfolgt eine Öffnung der Betankungs-Entlüftungsöffnung 38 in dem das Schließteil 15 über seinen kegelförmigen Abschnitt 45 die an dem Anschlag 7 anliegende Platte 11 weiter verschiebt und die Dichtplatte 5 von der Dichtung 6 bzw. von der Betankungs-Entlüftungsöffnung 38 abhebt.

In der Figur 3 ist ferner ein Längsschnitt des Druckbegrenzungsventils 28 dargestellt. Das Druckbegrenzungsventil 28 weist ein an dem Deckel 3 befestigtes Außengehäuse 52 auf, das mit einem Dichtring 70 zum Abschnitt 27 des Deckels 3 abgedichtet ist. In einem durch das Außengehäuse 52 bestimmten Hohlraum 53 ist in Richtung der Längsachse x ein Innengehäuse 54 verschiebbar angeordnet. Das Innengehäuse 54 stützt sich über eine Feder 55 an dem Abschnitt 27 des Deckels 3 ab. An dem Innengehäuse 54 ist ein stabförmiger Abschnitt 56 ausgebildet, der in einem rohrförmigen Abschnitt 57 des Deckelabschnittes 27 geführt ist. Die Befestigung des Außengehäuses 52 an dem Deckelabschnitt 27 erfolgt über eine Schnappverbindung. Zu diesem Zweck weist der Deckelabschnitt 27 einen Flansch 58 und das Außengehäuse 52 mindestens zwei Haken 59 auf.

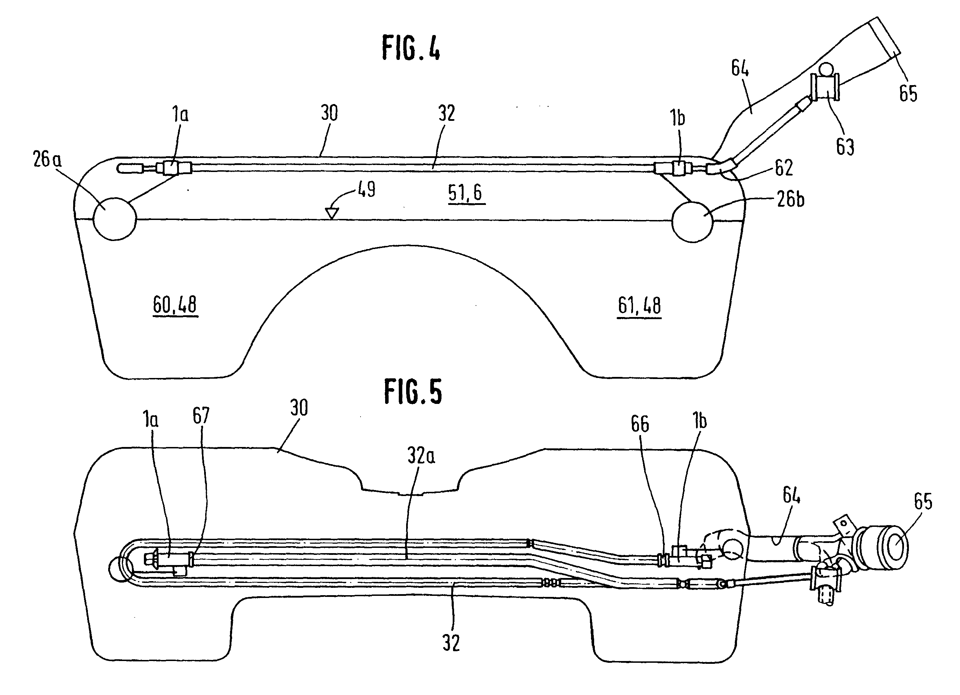

Die Figuren 4 und 5 zeigen einen Kraftstoffbehälter 30 mit zwei Kammern 60 und 61. In der Figur 4 ist der maximale Füllstand 49 eingezeichnet. Unterhalb des maximalen Füllstandes 49 befindet sich ein Raum zur Aufnahme des Kraftstoffes 48. Oberhalb des Füllstandes 49 befindet sich das Ausgleichsvolumen 51. Oberhalb der beiden Kammern 60 und 61 ist jeweils ein Ventil 1a und 1b mit Schwimmern 26a und 26b angeordnet und über die Entlüftungsleitungen 32 und 32 a miteinander verbunden. Durch die beiden Ventile 1a und 1b ist eine Entlüftung des Kraftstoffbehälters 30 auch bei einer Seitenneigung des Kraftstoffbehälters 30 bzw. des Kraftfahrzeuges möglich.

Die Entlüftungsleitung 32 führt durch eine im Kraftstoffbehälter 30 ausgebildete Öffnung 62 in die Atmosphäre zu einem Roll-over-Ventil 63. An das Roll-over-Ventil 63 kann ein nicht dargestellter Behälter mit einem Aktivkohlefilter oder dergleichen angeschlossen sein.

Ferner geht aus den Figuren 4 und 5 ein Einfüllrohr 64 mit einem daran angeordneten Kraftstoffdeckel 65 hervor. In der Figur 5 ist gezeigt, dass das Ventil 1b an einem Ende 66 der Entlüftungsleitung 32 und das Ventil 1a an einem Ende 67 eines Seitenarmes 32a der Entlüftungsleitung 32 vorgesehen ist.

## Patentansprüche

1. Ventil für einen Kraftstoffbehälter eines Kraftfahrzeuges,
mit einem Ventilgehäuse (2), das mit einem Schwimmerventil und mit einem Anschluss (31) für eine Entlüftungsleitung zur Atmosphäre versehen ist,
wobei an dem Ventil (1, 3) ein Druckventil (28) angeordnet ist, das bei einem vorbestimmten Überdruck (P_{28, max}) im Kraftstoffbehälter (30) öffnet,
wobei in dem Ventil (1,3) eine Betankungs-Entlüftungsöffnung (38) ausgebildet ist und die Betankungs-Entlüftungsöffnung (38) durch eine Dichtplatte (5,6) verschließbar ist, wobei die Dichtplatte (5) eine Betriebs-Entlüftungsöffnung (42) aufweist und die Betriebs-Entlüftungsöffnung (42) durch ein verschiebbares Schließteil (15) verschließbar ist
**dadurch gekennzeichnet, dass**
das Druckventil (28), das Schließteil (15), die Dichtplatte (5), die Betankungs-Entlüftungsöffnung (38), die Betriebs-Entlüftungsöffnung (42) und der Anschluss (31) für die Entlüftungsleitung rotationssymetrisch auf einer horizontalen Längsachse (x) des rohrförmigen Ventilgehäuses (2) angeordnet sind, wobei die Dichtplatte (5) und das Schließteil (25) in Richtung der horizontalen Längsachse (x) verschiebbar sind,
und dass die Verschiebung des Schließteils (15) in Abhängigkeit von der Lage eines an einem Schwimmerhebel (24) angeordneten Schwimmers (26) erfolgt.

2. Ventil nach Anspruch 1,
**dadurch gekennzeichnet, dass** auf das dem Anschluss (31) gegenüberliegenden Ende des Ventilgehäuses (2) ein Deckel (3) mit einem angeformten und in den Hohlraum (37) des Ventilgehäuses (2) hineinragenden rohrförmigen Abschnitt (36) aufgesetzt ist, über welchen die Dichtplatte (5) mit einer an dieser ausgebildeten Außenführung (40) in Richtung der Längsachse (x) des Ventilgehäuses verschiebbar geführt ist und wobei in der Außenführung (40) der Dichtplatte (5) weiterhin eine Innenführung (43) ausgebildet ist, durch die das Schließteil (15) in Richtung der Längsachse (x) verschiebbar geführt ist.

3. Ventil nach Anspruch 2,
**dadurch gekennzeichnet, dass** am Deckel (3) Haken (4) oder dergleichen ausgebildet sind, die einen Flansch (33) des Ventilgehäuses (2) umgreifen und den Deckel (3) an dem Ventilgehäuse (2) befestigen, wobei zwischen dem Flansch (33) des Ventilgehäuses (2) und dem Flansch (35) des Deckels (3) eine Dichtung (34) angeordnet ist und auf der dazu gegenüberliegenden Seite des Flansches (35) des Deckels (3) eine weitere Dichtung (6) angeordnet ist, die zur Abdichtung der Betankungs-Entlüftungsöffnung (38) bei einer Anlage der Dichtplatte (5) an der Dichtung (6) dient.

4. Ventil nach einem Anspruch 1 oder 2,
**dadurch gekennzeichnet, dass** an dem Schließteil (15) ein kegelförmiger Abschnitt (45) ausgebildet ist, der an einer verschiebbaren Platte (11) befestigt ist, und dass mindestens ein Anschlag (7) an der Dichtplatte (5) vorgesehen ist, der zum Öffnen der Betankungs-Entlüftungsöffnung (38) dient.

5. Ventil nach einem der vorhergehenden Ansprüche,
dass an dem Deckel (3) ein Abschnitt (20) ausgebildet ist, an dem eine Halterung (67) für einen Schwenkhebel (19) und ein Anschlag (22) zur Begrenzung des möglichen Schwenkwinkels α des Schwenkhebels (19) vorgesehen ist, wobei am Schwenkhebel (19) das Ende eines den Schwimmer (26) tragenden Schwimmerhebels (24) befestigt ist und der Schwenkhebel (19) am Schließteil (15) angreift und dieses somit entsprechend der Lage des Schwimmers (26) verlagert.

6. Ventil nach einem der vorhergehenden Ansprüche,
**dadurch gekennzeichnet, dass** an dem Deckel (3) ein Abschnitt (27) ausgebildet ist, an dem das Druckbegrenzungsventil (28) angeordnet ist.

7. Kraftstoffbehälter eines Kraftfahrzeuges, der mit mindestens zumindest zwei Ventilen (1) nach einem der Ansprüche 1 bis 5 versehen ist, wobei in dem Kraftstoffbehälter (30) ein Ausgleichsvolumen (51) integriert ist und der Kraftstoffbehälter zumindest zwei Kammern (60, 61) aufweist, denen jeweils ein Ventil (1a und 1b) zugeordnet ist, wobei sich die Ventile (1a, 1b) im dem Kraftstoff-Augleichsvolumen (51) des Kraftstoffbehälters (30) befinden und die vorhandene Anzahl von Ventilen (1a, 1b) an eine Entlüftungsleitung (32) angeschlossen ist, wobei die Entlüftungsleitung (32, 32a) zur Atmosphäre führt und außerhalb des Kraftstoffbehälters (30) mit mindestens einem Roll-over-Ventil (63) versehen ist.

## Claims

1. A valve for a fuel tank of a motor vehicle,
with a valve casing (2), which is provided with a float valve and with a connection (31) for a ventilation pipe to the atmosphere,
in which a pressure valve (28) is arranged on the valve (1, 3), which at a predetermined over pressure (P_{28, max}) opens into the fuel tank (30), whereby a refuelling ventilation opening (38) is formed and the refuelling ventilation opening can be closed by a sealing plate (5) by a movable closing part (15)
**characterised in that**
the pressure valve (28), the closing part (15), the sealing plate (5), the refuelling ventilation opening (38), the operating ventilation opening (42) and the connection (31) for the ventilation pipe are arranged rotationally symmetrical on a horizontal longitudinal axis (x) of the tube shaped valve casing (2), in which the sealing plate (5) and the closing part (25) are movable in the direction of the horizontal longitudinal axis (x), and that the movement of the closing part (15) is effected depending on the position of the float (26) arranged on the float lever (24).

2. A valve according to Claim 1,
**characterised in that** a lid (3) is set onto the opposite end of the valve casing (2) to the connection (31), with a tube shaped section (36) formed on it and extending into the hollow space (37) of the valve case (2), via which the sealing plate (5) with an outer guide (40) formed on this is guided in the direction of the longitudinal axis (x) of the valve casing and in which in the outer guide (40) of the sealing plate (5) an internal guide (43) is formed, by which the closing part (15) is guided movably in the direction of the longitudinal axis (x).

3. A valve according to Claim 2,
**characterised in that** hooks (4) or similar are formed on the lid (3), which engage around a flange (33) of the valve casing (2) and fasten the lid (3) to the valve casing (2), in which a seal (34) is arranged between the flange (33) of the valve casing (2) and the flange (35) of the lid (3) and on the opposite side of the flange (35) of the lid (3) a further seal (6) is arranged which serves to seal the refuelling ventilation opening (38) when the sealing plate (5) lies on the seal (6).

4. A valve according to Claim 1 or Claim 2,
**characterised in that** a cone shaped section is formed on the closing part (15), which is fastened onto a movable plate (11) and that at least on stop (7) is provided on the sealing plate (5), which serves to open the refuelling ventilation opening (38).

5. A valve according to one of the foregoing Claims,
**characterised in that** a section (20) is formed on the lid (3) on which a retainer (67) for a pivoting lever (19) and a stop (22) to limit the possible pivoting angle α of the pivoting lever (19) is provided, in which the end of a float lever (24) bearing the float (26) is fastened to the pivoting lever (19) and the pivoting lever (19) engages on the closing part (15), and thereby displaces it corresponding to the position of the float (26).

6. A valve according to one of the foregoing Claims,
**characterised in that** a section (27) is formed on the lid (3) on which a pressure limiting valve is arranged.

7. A fuel tank of a motor vehicle, which is provided with at least two valves (1) according to one of the Claims 1 to 5, in which a compensating volume (51) is integrated into the fuel tank (30) and the fuel tank has at least two chambers (60, 61), to which in each case a valve (1a and 1b) is assigned, whereby the valves (1a, 1b) are located in the fuel compensating volume (51) of the fuel tank (30) and the available number of valves (1a, 1b) is connected to a ventilation pipe (32), in which the ventilation pipe (32, 32a) leads to the atmosphere and is provide outside the fuel tank with at least one roll-over valve (63).

## Revendications

1. Soupape d'un réservoir d'essence d'un véhicule, avec un boîtier de soupape (2) munie d'une soupape à flotteur et d'un raccord (32) pour une conduite de purge vers l'atmosphère, une soupape de refoulement (28), qui s'ouvre dans le réservoir d'essence (30) à une surpression prédéfinie (P_{28, max}), étant disposée sur la soupape (1, 3), un évent de ravitaillement (38) étant formé dans la soupape (1, 3) et l'évent de ravitaillement (38) étant verrouillable par une plaquette-joint (5, 6), la plaquette-joint (5) présentant un évent de service (42), et l'évent de service (42) étant verrouillable par une pièce de fermeture (15) mobile,
**caractérisée en ce que**
la soupape de refoulement (28), la pièce de fermeture (15), la plaquette-joint (5), l'évent de ravitaillement (38), l'évent de service (42) et le raccord (31) de la conduite de purge sont disposés de manière symétrique en rotation sur un axe longitudinal (x) horizontal du boîtier de soupape (2) en forme de tube, la plaquette-joint (5) et la pièce de fermeture (25) étant mobiles dans le sens de l'axe longitudinal (x) horizontal, et **en ce que** le déplacement de la pièce de fermeture (15) a lieu en fonction de la position d'un flotteur (26) disposé sur un levier de flotteur (24).

2. Soupape selon la revendication 1,
**caractérisée en ce qu'**
un couvercle (3), avec une section (36) formée et s'étendant en forme de tube dans l'espace creux (37) du boîtier de soupape (2), est posé sur l'extrémité du boîtier de soupape (2) opposée au raccord (31), à l'aide de laquelle section la plaquette-joint (5) est guidée de manière mobile avec un guidage extérieur (40) formé sur celle-ci dans le sens de l'axe longitudinal (x) de la boîte de soupapes, et un guidage intérieur (43) étant en outre formé dans le guidage extérieur (40) de la plaquette-joint (5), grâce auquel guidage intérieur la pièce de fermeture (15) est guidée de manière mobile dans le sens de l'axe longitudinal (x).

3. Soupape selon la revendication 2,
**caractérisée en ce que**
des crochets (4) ou similaires sont formés sur le couvercle (3), qui entourent une bride (33) de la boite de soupapes (2) et fixent le couvercle (3) du boîtier de soupape (2), un joint (34) étant disposé entre la bride (33) du boîtier de soupape (2) et la bride (35) du couvercle (3), et un autre joint (6), servant à étancher l'évent de ravitaillement (38) en cas d'installation de la plaquette-joint (5) sur le joint (6), étant disposé sur le côté de la bride (35) qui y est opposé.

4. Soupape selon l'une des revendications 1 ou 2,
**caractérisée en ce qu'**
une section (45) conique, fixée à une plaque mobile (11), est formée sur la pièce de fermeture (15), et **en ce qu'**au moins une butée (7), servant à ouvrir l'évent de ravitaillement (38), est prévue sur la plaquette-joint (5).

5. Soupape selon l'une quelconque des revendications précédentes,
**caractérisée en ce qu'**
une section (20) est formée sur le couvercle (3), sur laquelle une attache (67) est prévue pour un levier pivotant (19), et une butée (22) est prévue pour limiter l'angle de pivotement possible α du levier pivotant (19), l'extrémité d'un levier à flotteur (24) portant le flotteur (26) étant fixée sur le levier pivotant (19), et le levier pivotant (19) s'engageant dans la pièce de fermeture (15) et décalant celle-ci de manière correspondante à la position du flotteur (26).

6. Soupape selon l'une quelconque des revendications précédentes,
**caractérisée en ce qu'**
une section (27) est formée sur le couvercle (3), sur laquelle est disposée la soupape de limitation de pression (28).

7. Réservoir d'essence d'un véhicule, muni d'au moins deux soupapes (1) selon l'une quelconque des revendications 1 à 5,
**caractérisée en ce qu'** un volume de compensation (51) étant intégré dans le réservoir d'essence (30), et le réservoir d'essence présentant au moins deux chambres (60, 61) auxquelles est respectivement associée une soupape (1a et 1b), les soupapes (1a, 1b) se trouvant dans le volume de compensation de carburant (51) du réservoir d'essence (30) et le nombre existant de soupapes (1a, 1b) étant raccordé à une conduite de purge (32), la conduite de purge (32, 32a) menant à l'atmosphère et étant munie d'au moins une soupape de roll-over (63) en dehors du réservoir d'essence (30).
